# EUROPÄISCHE PATENTSCHRIFT

(11) **EP 2 606 259 B1**
(45) Veröffentlichungstag und Bekanntmachung des Hinweises auf die Patenterteilung: **04.06.2014**
(21) Anmeldenummer: 11735598.2
(22) Anmeldetag: 21.07.2011
(51) Int. Cl.: F16H 47/04

(54) **LEISTUNGSVERZWEIGUNGSGETRIEBE FÜR EIN KRAFTFAHRZEUG**
POWER SPLIT GEARBOX FOR A MOTOR VEHICLE
ENGRENAGE DE BRANCHEMENT DE COUPLE POUR UN VÉHICULE AUTOMOBILE

(30) Priorität: 19.08.2010 DE 102010034751
(43) Veröffentlichungstag der Anmeldung: 26.06.2013
(73) Patentinhaber: Robert Bosch GmbH, 70442 Stuttgart (DE)
(72) Erfinder: REIMANN, Mario, 58300 Wetter (DE); BAAR, Alexander, 58099 Hagen (DE); MEISE, Andreas, 44795 Bochum (DE); FRANK, Stefan, 58636 Iserlohn (DE); MATALLA, Manuel, 58452 Witten (DE)
(74) Vertreter: Thürer, Andreas
(86) Internationale Anmeldenummer: PCT/EP2011/003652
(87) Internationale Veröffentlichungsnummer: WO 2012/022414

(56) Entgegenhaltungen:
- DE-B4-102008 021 010
- FR-A1- 2 793 861
- US-A- 3 675 507

## Beschreibung

Die Erfindung betrifft ein Leistungsverzweigungsgetriebe, insbesondere für ein Kraftfahrzeug, mit einem mechanischen und einem hydrostatischen Leistungszweig, welche zueinander parallel angeordnet mit einer gemeinsamen Antriebswelle in Kontakt stehen, wobei der hydrostatische Leistungszweig aus einem mit einer Hydropumpe gekoppelten Hydromotor besteht und über eine Zahnradstufe mit der Antriebswelle verbunden ist, wobei die verzweigte Leistung aus dem mechanischen und hydrostatischen Leistungszweig in einen stirnseitig angeordneten Rädertrieb zusammenführbar ist, welcher im Folgenden durch eine Abtriebswelle verbunden ist, wobei der mechanische Leistungszweig aus zwei Planetenradgetrieben mit Sonnenrädern, Planetenrädern und Hohlrädern besteht, wobei das Sonnenrad des ersten Planetenradgetriebes direkt auf der Antriebswelle platziert ist, während das Sonnenrad des zweiten Planetenradgetriebes über eine Sonnenwelle mit dem Rädertrieb in Kontakt steht, und wobei die Planetenräder beider Planetenradgetriebe koaxial angeordnet und auf einer gemeinsamen Planetenträgerwelle gelagert sind, wobei die Planetenträgerwelle auf der Seite des ersten Planetenradgetriebes über einen Planetensteg in dem Hohlrad des ersten Planetenradgetriebes gelagert ist und wobei auf der Seite des zweiten Planetenradgetriebes eine Kupplung angeordnet ist.

### Stand der Technik

Ein derartiges Leistungsverzweigungsgetriebe ist aus der DE 10 2008 021 010 B4 bekannt. Dieses Leistungsverzweigungsgetriebe weist neben einem ersten Planetenradgetriebe ein zweites Planetenradgetriebe auf, dessen Planetenräder über eine Kupplung mit der Sonnenradwelle des zweiten Planetenradgetriebes verschaltet werden können.

### Aufgabenstellung der Erfindung

Der Erfindung liegt die Aufgabe zugrunde, ein Leistungsverzweigungsgetriebe bereitzustellen, welches einen gegenüber dem Stand der Technik geringeren Bauraum benötigt.

Diese Aufgabe wird dadurch gelöst, dass mit der Kupplung das zweite Hohlrad mit der zweiten Sonnenwelle verbindbar ist. Durch diese Schaltung ist das von dieser Kupplung zu übertragende Moment geringer als beim Stand der Technik, bei dem von dieser Kupplung die Planetenräder des zweiten Planetenradgetriebes mit der Sonnenwelle verbunden werden. Dies liegt darin begründet, dass beim Stand der Technik das Hohlrad des zweiten Planetenradgetriebes frei läuft und folglich von der Kupplung das gesamte Moment der Planetenräder beider Planetenradgetriebe auf die Sonnenwelle übertr1agen werden muss. Durch die erfindungsgemäße Ausgestaltung wird dadurch, dass die Sonnenradwelle mit dem Hohlrad des zweiten Planetenradgetriebes verschaltet wird, eine Aufteilung des von den Planetenrädern eingeleiteten Moments auf die Sonnenwelle und das Hohlrad des zweiten Planetenradgetriebes erreicht. Es wird also ein Teil des Moments direkt in die Sonnenwelle eingeleitet, wobei dieser Anteil von der Kupplung nicht übertragen werden muss. Dadurch kann die Kupplung mitsamt des Betätigungsapparates gegenüber dem Stand der Technik (noch) kleiner ausgestaltet werden, wodurch sich eine Verringerung des benötigten Bauraums ergibt.

In Weiterbildung der Erfindung ist zwischen den Planetenrädern des zweiten Planetenradgetriebes und der Kupplung ein Zwischenring angeordnet. An diesem Zwischenring ist in weiterer Ausgestaltung ein Kolben zur Betätigung der Kupplung abgestützt. Dabei kann der Zwischenring auch derart zweigeteilt sein, dass an dem mit dem Kolben zusammenwirkenden Zwischenring eine zu dem Zwischenring frei bewegliche den Planetenrädern des zweiten Planetenradgetriebes zugewandte Scheibe angeordnet ist, in der die Achsen der Planetenräder gelagert sind. Auch durch diese Ausgestaltung lässt sich eine weitere Bauraumverringerung erreichen, da dann ein in dem ersten Hohlrad angeordneter Planetensteg, an dem die Achsen der Planetenräder befestigt sind, kleiner dimensioniert werden kann.

In Weiterbildung der Erfindung ist der Kolben hydraulisch betätigt. Dabei erfolgt in weiterer Ausgestaltung eine Hydraulikzuführung durch eine in die Sonnenwelle eingebundene Hydraulikzufuhrleitung. Eine solche Zuführung ist problemlos zu realisieren, wobei aber auch im Rahmen der Erfindung vorgesehen ist, die Hydraulikzuführung durch das Hohlrad des zweiten Planetenradgetriebes zu realisieren. Dabei ist dann der Zwischenring nicht an die Sonnenwelle angebunden, sondern an das zweite Hohlrad und der Zwischenring ist gegenüber der Sonnenradwelle frei beweglich. Durch eine weiterführende Leitung in dem zweiten Hohlrad kann dann an einer geeigneten Stelle beispielsweise neben der Lagerstelle des zweiten Hohlrads eine Einführung der Hydraulikflüssigkeit in die entsprechende Leitung erfolgen.

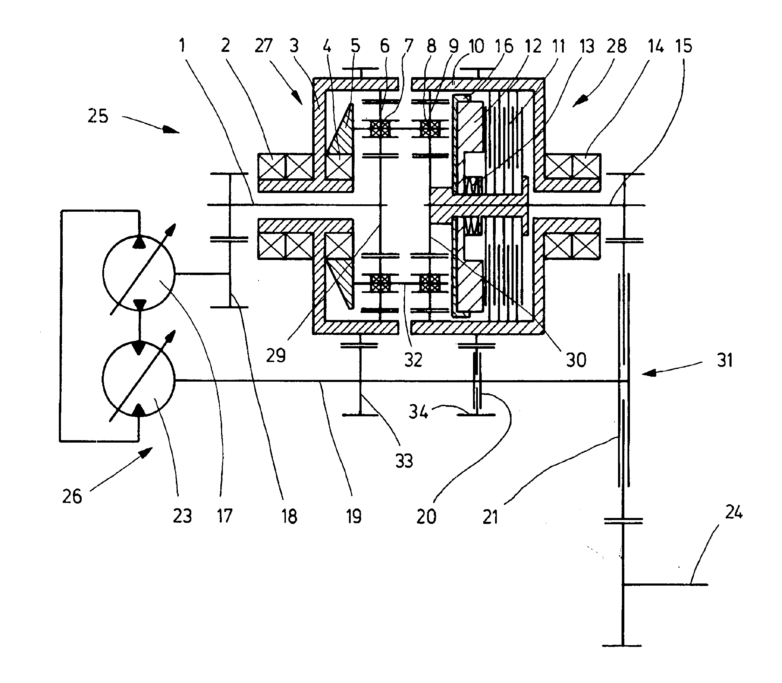

Weitere vorteilhafte Ausgestaltungen der Erfindung sind der Zeichnungsbeschreibung zu entnehmen, in der ein in der Figur dargestelltes Ausführungsbeispiel der Erfindung näher beschrieben ist.

### Beschreibung der Zeichnung

Die einzige Figur zeigt eine schematische Ansicht des erfindungsgemäßen Leistungsverzweigungsgetriebe, welches zwischen der die Antriebswelle 1 bildenden Sonnenradwelle und einer Abtriebswelle 24 angeordnet ist. Hierbei verfügt das Leistungsverzweigungsgetriebe über einen mechanischen Leistungszweig 25 sowie einen hydrostatischen Zweig 26. Der hydrostatische Zweig 26 weist eine hydraulische Pumpe 17 auf, welche hydraulisch mit einem hydraulischen Motor 23 gekoppelt ist, und steht über eine Stirnradstufe 18 mit der Sonnenradwelle 1 in Verbindung. Der mechanische Zweig 25 ist aus zwei Planetenradgetrieben 27 und 28 aufgebaut, wobei ein Sonnenrad 29 des ersten Planetenradgetriebes 27 direkt mit der Antriebswelle 1 verbunden ist bzw. auf dieser Welle angeordnet ist. Abtriebsseitig ist die zweite Sonnenwelle 15, auf welcher das Sonnenrad 30 des zweiten Planetenradgetriebes 28 platziert ist, mittels eines Rädertriebes 31 mit der Abtriebswelle 24 gekoppelt. Auf Seiten des hydrostatischen Leistungszweiges 26 kann eine Verbindung zwischen der abtriebsseitigen Welle 19 und der Abtriebswelle 24 mittels einer schaltbaren Kupplung 21 mit dem Rädertrieb 31 hergestellt werden. Um die über den mechanischen Leistungszweig 25 geführte Leistung entsprechend zu wandeln, sind die Planetenräder 6 und 9 der beiden Planetenradgetriebe 27 und 28 koaxial gemeinsam auf einer Planetenträgerwelle 32 über Wälzlager 7 und 8 gelagert. Die Planetenträgerwelle 32 ist über einen Planetensteg 5 über ein Wälzlager 4 in einem Gehäuseteil des ersten Hohlrades 3 gelagert. Das erste Hohlrad 3 ist weiterhin über ein Wälzlager 2 in einem nicht dargestellten Gehäuse für das gesamte Leistungsverzweigungsgetriebe gelagert.

Auf der Sonnenradwelle 15 des zweiten Planetenradgetriebes 28 ist ein Zwischenring 16 angeordnet und befestigt, wobei der Zwischenring 16 als Abstützung für einen Kolben 12 ausgelegt ist. Der Kolben 12 wird durch Zuführung von Hydraulikflüssigkeit durch die Sonnenradwelle 15 gegenüber dem Zwischenring 16 ausgefahren und presst die Kupplungslamellen eines Kupplungspaketes 11 gegeneinander. Dadurch wird eine Drehverbindung zwischen der Sonnenradwelle 15 und dem Hohlrad 10 des zweiten Planetenradgetriebes 28 hergestellt. Gelöst wird die Kupplung durch eine Feder 13, die nach Abschaltung des Hydraulikdrucks den Kolben 12 zurück zu den Zwischenring 16 presst. Das zweite Hohlrad 10 ist ebenso wie das erste Hohlrad 3 über ein Lager 14 in dem Gehäuse für das Leistungsverzweigungsgetriebe gelagert.

Die Hohlräder 3 und 10 weisen zudem auf ihren Außenumfang jeweils eine Verzahnung auf. Über diese Verzahnung steht das Hohlrad 3 über ein Zahnrad 33 permanent mit der abtriebsseitigen Welle 19 des hydrostatischen Leistungszweiges 26 in Verbindung. Über eine weitere Kupplung 20 kann zudem eine Koppelung zwischen der abtriebsseitigen Welle 19 und dem Hohlrad 10 des zweiten Planetenradgetriebes 28 mittels eines Zahnrads 34 hergestellt werden.

Mittels der dargestellten Anordnung lässt sich eine Leitungssummierung über drei Wege gestalten:
Zur Gestaltung eines ersten Übersetzungsverhältnisses ist die Kupplung 21 geschlossen, während die beiden Kupplungen 20 und 11 geöffnet sind. In diesem Fall erfolgt der Kraftfluss über den hydrostatischen Leistungszweig 26, da im Bereich des mechanischen Leistungszweiges 25 aufgrund des frei rotierenden Hohlrads 10 keine Leistungsübertragung erfolgt.

Zur Gestaltung eines zweiten Übersetzungsverhältnisses ist die Kupplung 11 geschlossen, während die beiden anderen Kupplungen 20 und 21 geöffnet sind. Im ersten Planetenradgetriebe 27 erfolgt eine Bündelung des Kraftflusses, welcher sich zum einen aus dem über das Sonnenrad 29 eingebrachten Teil und zum anderen aus einem Antrieb des Hohlrades 3 durch den hydrostatischen Leistungszweig 26 über das Zahnrad 33 zusammensetzt. Diese aufsummierte Leistung wird aufgrund der geschlossenen Kupplung 11 mittels der Planetenträgerwelle 32 auf die Sonnenradwelle 15 und das Hohlrad 10 aufgeteilt und durch die geschlossene Kupplung 11 wird der Anteil der in das Hohlrad 10 eingeleiteten Leistung ebenfalls über die Sonnenradwelle 15 und den Rädertrieb 31 in die Abtriebswelle 24 übertragen.

Ein weiteres Übersetzungsverhältnis ist darstellbar, indem die Kupplung 20 geschlossen ist, während die Kupplungen 11 und 21 geöffnet sind. In diesem Fall werden die Hohlräder 3 und 10 jeweils über den hydrostatischen Leistungszweig 26 betrieben, so dass im ersten Planetenradgetriebe 27 eine Summierung der Leistung aus dem Sonnenrad 29 und Hohlrad 3 erfolgt, die über die Planetenträgerwelle 32 zum zweiten Planetenradgetriebe 28 übertragen wird. Im zweiten Planetenradgetriebe 28 wird diese Leistung gemeinsam mit dem Kraftfluss über das Hohlrad 10 gebündelt und schließlich auf die Sonnenradwelle 15 übertragen. Ausgehend von der Sonnenradwelle 15 wird letztendlich die Leistung über den Rädertrieb 31 an die Abtriebswelle 24 abgegeben.

## Patentansprüche

1. Leistungsverzweigungsgetriebe, insbesondere für ein Kraftfahrzeug, mit einem mechanischen Leistungszweig (25) und einem hydrostatischen Leistungszweig (26), welche zueinander parallel angeordnet mit einer gemeinsamen Antriebswelle (1) in Kontakt stehen, wobei der hydrostatische Leistungszweig (26) aus einem mit einer hydraulischen Pumpe (17) gekoppelten hydraulischen Motor (23) besteht und über eine Zahnradstufe (18) mit der Antriebswelle (1) verbunden ist, wobei die verzweigte Leistung aus dem mechanischen und hydrostatischen Leistungszweig (25, 26) in einen stirnseitig angeordneten Rädertrieb (31) zusammenführbar ist, welcher im folgenden mit einer Abtriebswelle (24) verbunden ist, wobei der mechanische Leistungszweig (25) aus zwei Planetenradgetrieben (27, 28) mit Sonnenrädern (29, 30), Planetenrädern (6, 9) und Hohlrädern (3, 10) besteht, wobei das Sonnenrad (29) des ersten Planetenradgetriebes (27) direkt auf der Antriebswelle (1) platziert ist, während das Sonnenrad (30) des zweiten Planetenradgetriebes (28) über eine Sonnenradwelle (15) mit dem Rädertrieb (31) in Kontakt steht, und wobei die Planetenräder (6, 9) beider Planetenradgetriebe (27, 28) koaxial angeordnet und auf einer gemeinsamen Planetenträgerwelle (32) gelagert sind, wobei die Planetenträgerwelle (32) auf der Seite des ersten Planetenradgetriebes (27) über einen Planetensteg (5) in dem Hohlrad (3) des ersten Planetenradgetriebes (27) gelagert ist, und wobei auf der Seite des zweiten Planetenradgetriebes (28) eine Kupplung (11) angeordnet ist, **dadurch gekennzeichnet, dass** mit der Kupplung (11) das Hohlrad (10) des zweiten Planetenradgetriebes (28) mit der Sonnenradwelle (15) verbindbar ist.

2. Leistungsverzweigungsgetriebe nach Anspruch 1, **dadurch gekennzeichnet, dass** zwischen den Planetenrädern (9) des zweiten Planetenradgetriebes (28) und der Kupplung (11) ein Zwischenring (16) angeordnet ist.

3. Leistungsverzweigungsgetriebe nach Anspruch 2, **dadurch gekennzeichnet, dass** an dem Zwischenring (16) ein Kolben (12) zur Betätigung der Kupplung (11) abgestützt ist.

4. Leistungsverzweigungsgetriebe nach Anspruch 3, **dadurch gekennzeichnete, dass** der Kolben (12) hydraulisch betätigt ist.

5. Leistungsverzweigungsgetriebe nach Anspruch 4, **dadurch gekennzeichnet, dass** eine Hydraulikzuführung durch die Sonnenradwelle (15) erfolgt.

6. Antriebsstrang eines Kraftfahrzeuges, umfassend ein Leistungsverzweigungsgetriebe nach einem der vorherigen Ansprüche.

## Claims

1. Power split gearbox, in particular for a motor vehicle, having a mechanical power branch (25) and a hydrostatic power branch (26) which, arranged in parallel to one another, are in contact with a common drive shaft (1), the hydrostatic power branch (26) comprising a hydraulic motor (23) which is coupled to a hydraulic pump (17) and being connected to the drive shaft (1) via a gearwheel stage (18), it being possible for the branched power from the mechanical and hydrostatic power branch (25, 26) to be routed together into a gear drive (31) which is arranged on the end side and is connected subsequently to an output shaft (24), the mechanical power branch (25) comprising two epicyclic gear mechanisms (27, 28) with sun gears (29, 30), planetary gears (6, 9) and internal gears (3, 10), the sun gear (29) of the first epicyclic gear mechanism (27) being positioned directly on the drive shaft (1), whereas the sun gear (30) of the second epicyclic gear mechanism (28) is in contact with the gear drive (31) via a sun gear shaft (15), and the planetary gears (6, 9) of both epicyclic gear mechanisms (27, 28) being arranged coaxially and being mounted on a common planetary carrier shaft (32), the planetary carrier shaft (32) on the side of the first epicyclic gear mechanism (27) being mounted via a planet spider (5) in the internal gear (3) of the first epicyclic gear mechanism (27), and a clutch (11) being arranged on the side of the second epicyclic gear mechanism (28), **characterized in that** the internal gear (10) of the second epicyclic gear mechanism (28) can be connected to the sun gear shaft (15) by way of the clutch (11).

2. Power split gearbox according to Claim 1, **characterized in that** an intermediate ring (16) is arranged between the planetary gears (9) of the second epicyclic gear mechanism (28) and the clutch (11).

3. Power split gearbox according to Claim 2, **characterized in that** a piston (12) for actuating the clutch (11) is supported on the intermediate ring (16).

4. Power split gearbox according to Claim 3, **characterized in that** the piston (12) is actuated hydraulically.

5. Power split gearbox according to Claim 4, **characterized in that** a hydraulic feed takes place through the sun gear shaft (15).

6. Drive train of a motor vehicle, comprising a power split gearbox according to one of the preceding claims.

## Revendications

1. Transmission à répartition de puissance, en particulier pour un véhicule automobile, comprenant une branche de puissance mécanique (25) et une branche de puissance hydrostatique (26), lesquelles sont disposées parallèlement l'une à l'autre et sont en contact avec un arbre d'entraînement commun (1), la branche de puissance hydrostatique (26) étant constituée d'un moteur hydraulique (23) accouplé à une pompe hydraulique (17) et étant reliée à l'arbre d'entraînement (1) par le biais d'un étage à roues dentées (18), la puissance bifurquée à partir des branches de puissance mécanique et hydrostatique (25, 26) pouvant être rassemblée dans un entraînement par engrenage (31) disposé du côté frontal, lequel est ensuite relié à un arbre de sortie (24), la branche de puissance mécanique (25) étant constituée de deux transmissions planétaires (27, 28) pourvues de roues solaires (29, 30), de roues planétaires (6, 9) et de couronnes (3, 10), la roue solaire (29) de la première transmission planétaire (27) étant placée directement sur l'arbre d'entraînement (1), tandis que la roue solaire (30) de la deuxième transmission planétaire (28) est en contact avec l'entraînement par engrenage (31) par le biais d'un arbre de roue solaire (15), et les roues planétaires (6, 9) des deux transmissions planétaires (27, 28) étant disposées de manière coaxiale et montées sur un arbre de porte-satellites commun (32), l'arbre de porte-satellites (32) étant monté, du côté de la première transmission planétaire (27), dans la couronne (3) de la première transmission planétaire (27) par le biais d'un porte-satellites (5), et un embrayage (11) étant disposé du côté de la deuxième transmission planétaire (28), **caractérisée en ce que** la couronne (10) de la deuxième transmission planétaire (28) peut être reliée à l'arbre de roue solaire (15) par l'intermédiaire de l'embrayage (11).

2. Transmission à répartition de puissance selon la revendication 1,
**caractérisée en ce qu'**une bague intermédiaire (16) est disposée entre les roues planétaires (9) de la deuxième transmission planétaire (28) et l'embrayage (11).

3. Transmission à répartition de puissance selon la revendication 2,
**caractérisée en ce qu'**un piston (12) pour l'actionnement de l'embrayage (11) est supporté sur la bague intermédiaire (16).

4. Transmission à répartition de puissance selon la revendication 3,
**caractérisée en ce que** le piston (12) est actionné hydrauliquement.

5. Transmission à répartition de puissance selon la revendication 4,
**caractérisée en ce qu'**une alimentation hydraulique s'effectue à travers l'arbre de roue solaire (15).

6. Chaîne cinématique d'un véhicule automobile, comportant une transmission à répartition de puissance selon l'une quelconque des revendications précédentes.
